# EUROPEAN PATENT SPECIFICATION

(11) **EP 4 372 307 B1**
(45) Date of publication and mention of the grant of the patent: **02.07.2025**
(21) Application number: 22208654.8
(22) Date of filing: 21.11.2022
(51) Int. Cl.: G01B 5/00, G01B 11/14, G01B 11/16, G01B 11/25, G06T 7/00, B62D 5/00, G01N 21/88

(54) **QUALITY INSPECTION OF A VEHICLE BODY**
QUALITÄTSPRÜFUNG EINER FAHRZEUGKAROSSERIE
INSPECTION DE QUALITÉ D'UNE CARROSSERIE DE VÉHICULE

(43) Date of publication of application: 22.05.2024
(73) Proprietor: VOLVO TRUCK CORPORATION, 405 08 Göteborg (SE)
(72) Inventor: BARDIYA, Shrikant, 491001 Bhilai (IN); SHETYE, Abhijeet, 560093 Bengaluru (IN)
(74) Representative: Zacco Sweden AB

(56) References cited:
- WO-A1-2021/176384
- FR-A1- 2 928 453
- US-A1- 2016 140 703
- US-A1- 2021 375 078

## Description

### TECHNICAL FIELD

The disclosure relates generally to quality inspection of a vehicle parts. In particular aspects, the disclosure relates to a system for quality inspection of a vehicle part and a method for quality inspection measurement of a vehicle part. The disclosure can be applied in heavy-duty vehicles, such as trucks, buses, and construction equipment. Although the disclosure may be described with respect to a particular vehicle, the disclosure is not restricted to any particular vehicle.

### BACKGROUND

Quality inspection of a vehicle body and vehicle parts is traditionally performed manually. For instance, gap and flush measurements of interior and exterior of a vehicle are performed by a flush measurement gun. Alternatively, filler gauges can be used. Performing quality inspection of a vehicle parts and vehicle body manually is time consuming, and measuring the entire vehicle can take hours or days to finish. Further, given that the measurement is performed manually, significant measurement errors may occur. Therefore, there is a need for providing an improved system and a method for quality inspection of a vehicle parts and vehicle body. US 2021/0375078 A1 relates to detecting cosmetic damage on a vehicle. FR 292853 A1 discusses a system for measuring gaps and flushes between bodywork parts. US 2016/0140703 A1 discloses a system for inspecting a vehicle body. WO 2021/176384 A1 relates to a system for locating and treating surface defects on motor vehicle bodies.

### SUMMARY

According to a first aspect of the disclosure, apparatus for performing a quality inspection measurement of a vehicle part is disclosed. The apparatus comprises a light source, a camera, and a processing unit. The processing unit is configured to provide a reference image. The reference image comprises a reference light grid overlaying a reference vehicle part. The light source is arranged at a first predefined distance from the vehicle part and configured to project an actual light grid onto the vehicle part. The camera is arranged at a second predefined distance from the vehicle part and configured to obtain an actual image of the vehicle part. The actual image comprises the actual light grid projected onto the vehicle part. The processing unit is configured to compare the reference image and the actual image using image processing algorithms to thereby obtain the quality inspection measurement of the vehicle part. The apparatus is configured to perform gap/flush measurements through the comparison of the reference image and the captured actual image.

The first aspect of the disclosure may seek to reduce time spent on performing a quality inspection measurement of a vehicle part, thereby reducing overall production time of a vehicle and thereby production costs. Furthermore, the first aspect of the disclosure may seek to automate a quality inspection measurement of a vehicle part. A technical benefit may therefore include faster, automatic, and highly accurate quality inspection measurement.

In the present context, the quality inspection measurement of a vehicle part is to be understood as any measurement performed on the vehicle part (such as vehicle body, a section or the entire body, sub-assembly, interior, exterior, etc.) and compared with predefined measurements. In order to ensure reliability and safety of the vehicle, the vehicle parts and vehicle body must comply with predefined measurements. The quality inspection ensures that the vehicle parts are produced in accordance with manufacturer standards.

According to the present disclosure, an apparatus for performing quality inspection measurement of vehicle parts is disclosed. However, the apparatus can be scaled such that it performs measurements of vehicle body, and not only the vehicle parts.

The vehicle part may refer to any part of the vehicle, such as various components, a portion or the entire outer vehicle body structure, vehicle interior, vehicle exterior, subassemblies, and the like. The vehicle part may also include a plurality of parts that form a larger assembly. The vehicle part may refer to vehicle body part segments. The vehicle may be a car, bus, truck, airplane, vessel, or similar. The apparatus may perform measurements on the outer lines of a vehicle's cabin and its bodywork, as well as its interior. In order to perform measurements on different bodywork sections, the apparatus may be repositioned and/or scaled in size.

The apparatus comprises a light source. In the present context, the term "light source" is to be understood as a system configured to generate a light grid and project it to an object of interest. The light source may comprise one source generating a light beam and one or more optical elements configured to manipulate the light beam. The light source used in the apparatus may generate visible light or light detectable by the camera of the apparatus. The light source may provide collimated light. A single light source may provide light lines projected onto the vehicle part. The light source may include lasers, light emitting diodes (LEDs), and similar. A single light source may be used in combination with optical elements such as mirrors, beam splitters, optical prisms, and similar, to thereby form the light source of the apparatus. Thus, these optical elements may be considered as forming part of the light sources. The light source may include a plurality of individual light sources. At least two light sources may be spatially separated. Each light source may be arranged at a distance from the vehicle part. Depending on the size of the section to be inspected, the distance can be adapted. Typically, the larger the section of interest is, the more distanced is the light source from the section. Also, the larger the section of interest is, three or more light sources may be used or a network of optical elements can be scaled up. Furthermore, accuracy of the measurement is increased if three or more light sources are used. A first light source may be at a first laser's predefined distance from the section of interest. A second light source may be at a second laser's predefined distance from the section of interest. The first (second, third...) light source may comprise more than one LED/laser and/or one or more optical elements grouped together. At least two light source groups may be spatially separated. Each light source may be configured to project plurality of light lines onto the vehicle part. Each light source may project parallel light lines onto the vehicle part. A first group of parallel light lines of the first light source may intersect with a second group of parallel light lines of the second light source thereby forming the actual light grid onto the vehicle part. The actual light grid may cover the entire vehicle part. The actual light grid is visible for the camera. The light sources may be moved in order to obtain desired light grid. If the section under inspection comprises particular lines, gaps, or similar to be inspected, the light lines may be inclined with respect to the particular lines/gaps of the section. In other words, the light lines may not be parallel to gaps/lines under inspection. In general, the light grid may comprise at least two groups of parallel light lines, wherein a first group of parallel light lines intersects a second group of parallel light lines.

The light source may form an illumination system. The illumination system may comprise one single light source and one or more optical elements configured to split the light beam of the single light source into at least two light beams. The light beams may then be further manipulated by one or more optical elements to thereby form an actual light grid projected onto the vehicle part.

The camera of the apparatus may correspond to the light source used in the apparatus. The camera may be configured to detect the actual light grid projected onto the vehicle part of interest. The camera may be configured to capture the vehicle part with the actual light grid projected thereto. The camera may be configured to detect the entire actual light grid and/or the entire vehicle part of interest in one take. In other words, the camera may not be moved during the measurement. The camera may be arranged at a second predefined distance from the vehicle part. The second predefined distance may be different from the distance of the light source. The camera may be arranged at a position different from placement of the light source. The distance of the camera and the distance of any of the light sources from the vehicle part may be the same while the placement of these components may be different with respect to the vehicle part. The camera may be arranged at a distance from the vehicle part and configured to obtain an actual image of the vehicle part. The camera may include an MIPI camera module, a GMSL camera, a stereo camera, a CCD, CMOS sensor etc. Resolution of the camera may range from 1MP to 50 MP. The camera detects the actual light grid to thereby generate the actual image. The actual image may comprise the vehicle part and the actual light grid projected onto the vehicle part. The actual image may comprise image data of the vehicle part with the actual light grid projected thereto.

The processing unit may be configured to perform image processing. The processing unit may be a personal computer. The processing unit may be connected with the camera. The processing unit may be connected with the illumination system. The processing unit may be connected with the plurality of light sources. The processing unit may be configured to move/reposition the illumination system to thereby change the actual light grid projected onto the vehicle part. The processing unit may be configured to receive the actual image obtained by the camera. The processing unit may be integrated in the camera.

In order to perform quality inspection measurement, the actual image, obtained on the vehicle under inspection, may need to be compared with a reference measurement. The reference measurement may be taken on a reference vehicle, i.e. on a reference vehicle part. The reference vehicle may be a vehicle of the same type as the vehicle under inspection and having all the parts complying with quality demands. In other words, the reference vehicle is the one having correct dimensions and thereby being nominally accurate. The reference image may therefore be obtained by the identical apparatus setup used for obtaining the actual image, wherein the apparatus is arranged to measure the reference vehicle, or more precisely, a reference vehicle part of the reference vehicle. Such reference image may be received, by the processing unit, from the camera.

Alternatively, the processing unit may be configured to generate the reference image of the reference vehicle part. The reference image may be generated on the basis of information received from the illumination system and the camera, in combination with image data of the reference vehicle. In particular, the information received from the illumination system and the camera may relate to their relative positioning with respect to the vehicle under inspection. In this way, a reference light grid can be created. The reference light grid may then be used in combination with the reference vehicle to thereby obtain the reference image.

The reference image comprises the reference light grid overlaying the reference vehicle part. The actual image comprises the actual light grid projected onto the vehicle part under inspection. The actual light grid is formed on the basis of the vehicle part under inspection and may therefore differ from the reference light grid which is in turn formed on the basis of the reference vehicle part. The difference may exist at portions of the vehicle part which deviate from the reference vehicle part. At these portions, light coming from the light source will reach the surface either earlier or later, as compared to the reference vehicle part and thereby the light line will be off-set compared to what is expected. In other words, the light grid is identifying outlines of the vehicle part. The outlines of the vehicle part reflect surface abnormalities and gaps on the vehicle part.

The processing unit is configured to compare the reference image and the actual image using image processing algorithms to thereby obtain the quality inspection measurement of the vehicle part. In principle, the two light grids, actual and reference, are what is compared. The processing unit may be configured to make a contrast on the images and thereby highlight and extract only the light grids to be compared. The comparison may result in determining a difference between the two light grids. When comparing the two grids, each light line of the actual grid is compared with each light line of the reference grid. The obtained difference may then be compared with a prescribed tolerance value. If the difference is within the tolerance value, the vehicle part under inspection will be classified as compliant with standards. Otherwise, the vehicle part under inspection will be classified as non-compliant with standards.

The apparatus of the present disclosure may be scaled such that quality measurement of the entire vehicle body is performed in one take.

In some examples, the processing unit may be configured to determine if the obtained quality inspection measurement of the vehicle part complies with predetermined design tolerance values for the vehicle part. The processing unit may receive the predetermined tolerance values and compare these with deviations between the actual light grid and the reference light grid to thereby determine if the vehicle part complies with quality standards. The predetermined design tolerance values describe acceptable deviation of the actual design from the reference design. A technical benefit of this determination may be faster quality inspection of the vehicle compared to known solutions.

In some examples, the processing unit may be configured to identify outlines of the vehicle part using image processing of the obtained actual image. The actual image comprises light lines, i.e. the actual light grid, formed on the vehicle part. Each of these light lines represent a profile of a portion of the vehicle part on which the light line is formed. Therefore, by using image processing it is possible to reconstruct and identify outlines of the vehicle part. Precision of the identified outline may depend on density of the light lines. A technical benefit of identification of outlines of the vehicle part may be an improved accuracy of the measurement, compared to known solutions.

In some examples, the quality inspection measurement may include gap and/or flush measurement between the identified outlines of the vehicle part (e.g. of the vehicle bodywork). In this example, the vehicle part comprises at least one gap formed between two vehicle portions of the vehicle part. For instance, a surface section of the vehicle body covering at least portions of the two body parts may include the gap. The gap may be defined as the horizontal separation between two surfaces, and the flush may be defined as the vertical displacement between two surfaces in the orthogonal direction.

Gap/flush measurements are performed through comparison of the reference image and the captured actual image. In case of the vehicle body, defects resulting from gap/flush larger than prescribed may create unpleasant noises, poor insulation, or water leakage, which reduce the vehicle's quality and performance over time. Gaps are typically formed between the vehicle's body and various panels such as doors, hood, and others. Hence, inspecting the vehicle body for any deviations of the gaps/flushes during the assembly process is crucial to prevent further failures and thereby improve safety of the vehicle body. Providing an apparatus capable of measuring gaps and flushes between the vehicle's body and various panels, and ensuring that the measured values comply with requirements is advantageous as it results in overall safer vehicles.

In some examples, the processing unit is configured to determine if the performed gap and/or flush measurements comply with corresponding predetermined design tolerance values for the vehicle part, such as vehicle body part.

Furthermore, the processing unit may be configured to perform other measurements, such as surface profile measurements, hole position measurement, angularity measurements, line/edge profile measurements, sub-assembly level gap and flush measurements, and similar measurements on the vehicle, vehicle elements, vehicle body or other vehicle assemblies and vehicle parts. The processing unit may comprise image processing algorithm configured to determine if the performed measurements of angles, chamfers, and/or edges comply with predetermined design tolerance values for the vehicle body part.

In some examples, the apparatus is configured with a machine learning model that is trained to estimate the predetermined design tolerance values based on information from the reference image. A plurality of vehicle body measurement data may be used to train the machine learning model to thereby identify the maximum and minimum delta design tolerance values (δ₁ₘₐₓ, δ₁ₘᵢₙ). These values may then be compared with the rest of the quality measurements to determine whether the measurement is higher or lower than the maximum and minimum delta values. Based on the determination, the inspected part will be classified as compliant or non-compliant.

In some examples, the light source comprises at least one laser and at least one optical element, such as a mirror, lens, beam-splitter, etc. The light source may be configured to generate parallel grid lines. The laser beam may be directed onto the mirror which may then project a plurality of light lines which form part of the light grid. The mirror may be an oscillating mirror. Any other optical element may be used in combination with the laser to create light lines. The light grid may be formed by at least one laser and one or more optical elements configured to manipulate a single laser beam. A technical benefit of such setup is that it is easy to be arranged, it is simple, flexible, and scalable. Scalability of the illumination system can be achieved by using additional optical elements and/or additional lasers, to thereby allow for generation of a light grid which correspond to the size of the section under inspection or desired resolution of the measurements.

It is possible to perform the gap/flush measurements based on the detected light grid in the obtained actual image, as well as any other measurement of the vehicle body. The detected light grid is then compared with the reference image measurements and based on the comparison, the quality measurement is established.

In some examples, the processing unit is further configured to generate error data. The error data may be indicating which portions of the vehicle part do not comply with the predetermined design tolerance values. The error data may be then be used in root-cause analysis as well as in production processes thereby improving production of the vehicle.

In some examples, the apparatus further comprises a display for displaying the error data. Displaying the error data may further reduce time required for performing the measurement. If a large number of errors or some important/significant errors are identified, further image processing may be stopped and the part under inspection may be returned to production for improvements and corrections.

In some examples, the apparatus is configured with a machine learning model that is trained to estimate the reference image based on information obtained from a plurality of measured vehicle bodies. A plurality of measured vehicle bodies may be used to train the machine learning model to thereby generate the reference vehicle body image. A technical benefit of generation of the reference image of the reference vehicle body is that the apparatus itself does not have to be used for obtaining the reference image, but rather the processing unit can obtain it from the machine learning model. In this way the quality measurement is simplified.

In some examples, the reference grid is defined by the same predefined distances between the light source and the camera and the vehicle part. In other words, when taking the reference image, relevant distances between the apparatus (light source, camera) and the imaged reference part may be the same as the corresponding distances between the apparatus and the part under inspection. It is thereby ensured that the reference grid and the actual grid correspond to each other and only deviations in the inspected part will be identified. The relevant distances (e.g. between the light source and the measured object) need to be verified for every measurement. If the reference grid is computer-generated, care should be taken about defined distances between the setup and the measured object.

In some examples, the light source and the camera are configured to be repositioned to thereby allow for a quality inspection measurement of another portion of the vehicle part, or of the vehicle body. The light grid may be generated based on complexity of the part to be measured. For example, if the number of parts or number of measurements are significant, a greater number of laser beams may be used, such as three or more, to thereby cover all features of interest, such as all angles, gaps, holes, etc. A technical benefit of the reconfigurable apparatus is flexibility and versatility thereby allowing for inspection of parts which differ in size and volume. The apparatus can be used for small parts as well as for larger parts of a vehicle.

In some examples, the quality inspection measurement of the entire vehicle body is performed with at least three light sources. In other terms, the apparatus may be increased to thereby cover larger space. The light sources may be arranged on different sides of the vehicle body (e.g. front, rear, top) to capture complete body images in one time. Each laser source may require a camera arranged on the same side to capture the image.

Also, the apparatus may be scaled up in order to achieve better accuracy. In particular, a number of light lines in the light grid determine a number of data points used by the processing unit and the image processing algorithm. The larger the number of data points (grid lines) is, the more accurate the measurement will be. A technical benefit of the scalable apparatus is faster measurement, and thereby cheaper production.

In some examples, the processing unit is configured to compare the reference light grid and the actual light grid by image processing algorithms in order to determine a mismatch between corresponding light lines of the reference light grid and the actual light grid. The processing unit may be configured to make a contrast on the actual image to thereby highlight and extract only the actual light grid. Also, the processing unit may extract the reference grid and compare it with the extracted actual grid. The image processing algorithms used for the grid extraction and further comparison of the grids are well-known in the art, (e.g. Contrast Enhancement algorithm, Dithering and half-toning algorithm, Elser difference-map algorithm, Feature detection algorithm, Blind deconvolution algorithm, Seam carving algorithm, Segmentation algorithm.) A technical benefit of comparing only the grids is simplicity of the image processing step.

According to a second aspect of the disclosure, method for performing a quality inspection measurement of a vehicle part is disclosed. The method comprises: generating, by a processing unit, a reference image, the reference image comprising a reference grid overlaying a reference vehicle part of a reference vehicle; projecting, by a light source, an actual light grid onto the vehicle part, the light source being arranged at a first predefined distance from the vehicle part; obtaining, by a camera, an actual image of the vehicle part, the actual image comprising the actual light grid projected onto the vehicle part, the camera being arranged at a second predefined distance from the vehicle part; comparing, by the processing unit, the reference image and the actual image using image processing; and obtaining, based on the comparison performed by the processing unit, the quality inspection measurement of the vehicle part. Gap/flush measurements are performed through the comparison of the reference image and the captured actual image.

The second aspect of the disclosure may seek to reduce time spent on performing a quality inspection measurement of a vehicle body, thereby reducing overall production time of a vehicle and thereby production costs. Furthermore, the second aspect of the disclosure may seek to automate a quality inspection measurement of a vehicle body. A technical benefit may therefore include faster, automatic, and highly accurate quality inspection measurement, what in turn may result in cheaper production and more reliable vehicles.

The above aspects, accompanying claims, and/or examples disclosed herein above and later below may be suitably combined with each other as would be apparent to anyone of ordinary skill in the art.

Additional features and advantages are disclosed in the following description, claims, and drawings, and in part will be readily apparent therefrom to those skilled in the art or recognized by practicing the disclosure as described herein. There are also disclosed herein control units, computer readable media, and computer program products associated with the above discussed technical benefits.

### BRIEF DESCRIPTION OF THE DRAWINGS

With reference to the appended drawings, below follows a more detailed description of aspects of the disclosure cited as examples.
**FIG. 1** is an exemplary apparatus for a quality inspection measurement of a vehicle body part according to one example.
**FIG. 2** is an exemplary light source used in the apparatus for a quality inspection measurement of a vehicle body part according to one example.
**FIG. 3** is an exemplary apparatus for a quality inspection measurement of a vehicle body part according to one example.
**FIG. 4** is an exemplary apparatus for a quality inspection measurement of a vehicle body part according to one example.
**FIG. 5** is an exemplary method for a quality inspection measurement of a vehicle body part according to one example.

### DETAILED DESCRIPTION

Aspects set forth below represent the necessary information to enable those skilled in the art to practice the disclosure.

There is a need for providing an improved system and a method for quality inspection of a vehicle body. The present disclosure may provide an apparatus and a method for improved quality inspection measurements of a vehicle body. The apparatus and the method may provide faster quality inspection measurements compared to the existing solutions. Furthermore, the apparatus and the method of the present disclosure may provide scalability, flexibility, versatility, and high accuracy of the quality inspection measurements.

It should be noted that in all the figures, a vehicle body is used as an example for a vehicle part. Other vehicle parts may be inspected using essentially the same apparatus. The apparatus shown if following figures may also be arranged in the vehicle to thereby measure interior of the vehicle.

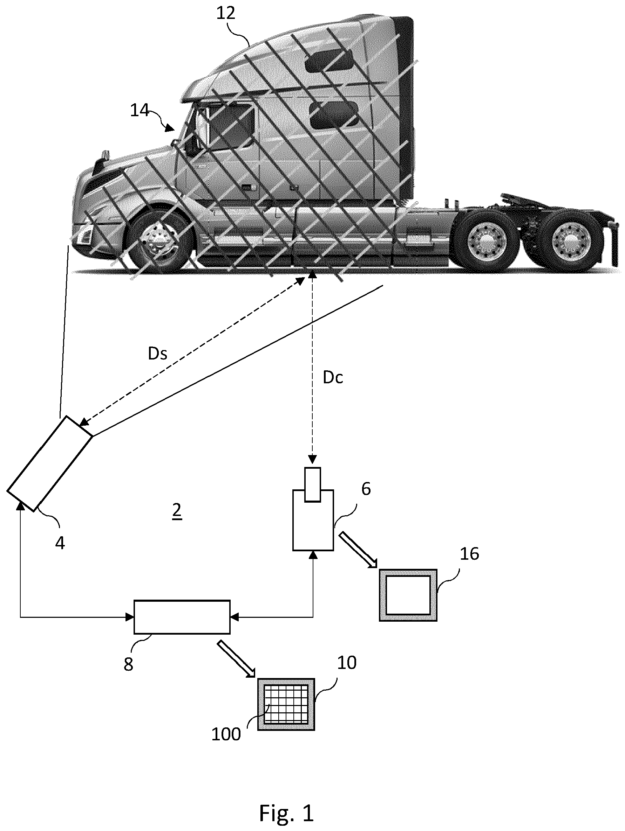

**FIG. 1** is an exemplary apparatus 2 for a quality inspection measurement of a vehicle body part 12 according to one example. The apparatus 2 comprises a light source 4, a camera 6, and a processing unit 8. The processing unit 8 is configured to provide a reference image 10. The reference image 10 comprises a reference light grid overlaying a reference body part. The light source 4 is arranged at a first predefined distance Ds from the vehicle body part 12 and configured to project an actual light grid 14 onto the vehicle body part 12. The camera 6 is arranged at a second predefined distance Dc from the vehicle body part 12 and configured to obtain an actual image 16 of the vehicle body part. The actual image 16comprises the actual light grid 14 projected onto the vehicle body part 12. The processing unit 8 is configured to compare the reference image 10 and the actual image 16 using image processing algorithms to thereby obtain the quality inspection measurement of the vehicle body part 12 under inspection.

The first predefined distance Ds can be defined as a distance between the centroid of the vehicle body part 12 and the light source 4. The second predefined distance Dc can be defined as a distance between the centroid of the vehicle body part 12 and the camera 6. Alternatively, these distances may be defined as the minimum distances between the light source/camera to the vehicle body part 12.

By changing the distances Ds and Dc and/or repositioning the apparatus 2, the apparatus 2 can be scaled such that it performs measurements of either smaller or larger vehicle body parts. Typically, the larger the section of interest is, the more distanced is the light source from the section. Also, the larger the section of interest is, three or more light sources may be used or a network of optical elements can be scaled up. Furthermore, accuracy of the measurement is increased if three or more light sources are used. A technical benefit of the reconfigurable apparatus is flexibility and versatility thereby allowing for inspection of parts which differ in size and volume.

The vehicle body part 12 may refer to a portion or the entire outer vehicle body structure. It may refer to, e.g., a vehicle door only. The vehicle body part 12 (referred in the claims as a vehicle part) may include a plurality of body part segments. The vehicle may be a car, bus, truck, airplane, vessel, or similar.

The camera 6 of the apparatus 2 may correspond to the light source 4 used in the apparatus. The camera 6 may be configured to detect the actual light grid 14 projected onto the vehicle part of interest. The camera 6 may be configured to capture the vehicle body part 12 with the actual light grid 14 projected thereto. The camera 6 may be configured to detect the entire actual light grid 14 and/or the entire vehicle body part 12 in one take. In other words, the camera may not be moved during the measurement. The camera 6 may be arranged at a position different from placement of the light source 4. Ds and Dc may be the same while the placement of these components 4, 6 may be different with respect to the vehicle body part 12 under inspection. The camera may include an MIPI camera module, a GMSL camera, a stereo camera, a CCD, etc. Resolution of the camera may range from 1MP to 10 MP.

The camera 6 detects the actual light grid 14 to thereby generate the actual image 16. The actual image 16 may comprise the vehicle body part 12 and the actual light grid 14 projected onto the vehicle body part 12. The actual image 16 may comprise image data of the vehicle body part 12 with the actual light grid 14 projected thereto.

The processing unit 8 may be configured to perform image processing. The processing unit 8 may be a personal computer. The processing unit may be connected with the camera 6 and the light source 4 and configured to move/reposition the source 4 and thereby change the actual light grid 14 projected onto the vehicle body part 12. The processing unit 8 may be configured to receive the actual image 16 obtained by the camera 6. The processing unit 8 may be integrated in the camera 6.

In order to perform quality inspection measurement, the actual image 16 is compared with the reference image 10. The reference image 10 may be taken on a reference vehicle (not shown). The reference vehicle may be a vehicle of the same type as the vehicle under inspection and having all the parts complying with quality demands. In other words, the reference vehicle is the one having correct dimensions and thereby being nominally accurate. The reference image 10 may therefore be obtained by the identical apparatus setup 2 used for obtaining the actual image 16, wherein the apparatus 2 is arranged to measure the reference vehicle body part. Such reference image 16 may be received, by the processing unit 8, from the camera 6.

Alternatively, the processing unit 8 may be configured to generate the reference image 16. The reference image may be generated on the basis of information received from the light source 4 and the camera 6 (in particular Ds and Dc), in combination with image data of the reference vehicle which can be provided to the processing unit 8.

The processing unit 8 is configured to compare the reference image 10 and the actual image 16 using image processing algorithms to thereby obtain the quality inspection measurement of the vehicle body part 12. In principle, the two light grids, actual and reference, are what is compared. The processing unit 8 may be configured to make a contrast on the images and thereby highlight and extract only the light grids to be compared. The comparison may result in determining a difference between the two light grids. When comparing the two grids, each light line of the actual grid 14 is compared with each light line of the reference grid 100 100. The obtained difference may then be compared with a prescribed tolerance value. If the difference is within the tolerance value, the vehicle body part 12 under inspection will be classified as compliant with standards. Otherwise, the vehicle body part 12 under inspection will be classified as non-compliant with standards.

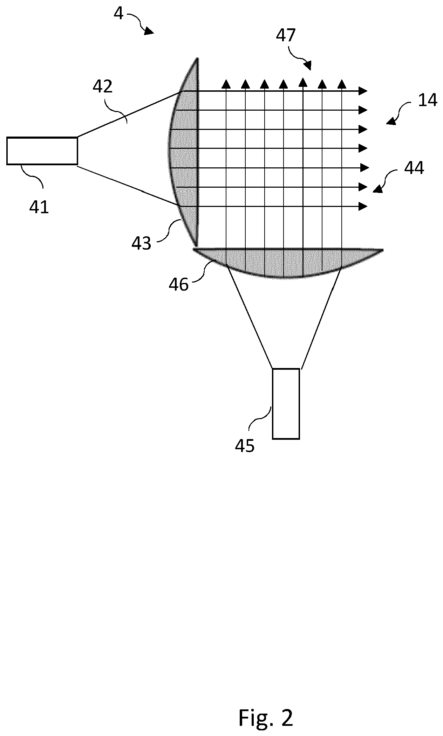

**FIG. 2** is an exemplary light source 4 used in the apparatus 2 for a quality inspection measurement of a vehicle body part according to one example. The light source may be a system configured to generate a light grid and project it to an object of interest. The light source 4 may comprise one source 41 generating a light beam 42 and one or more optical elements 43 configured to manipulate the light beam 41. The light source 4 used in the apparatus may generate visible light or light detectable by the camera of the apparatus. The light source 4 may provide collimated light. A single light source 41 may provide light lines 44 to be projected onto the vehicle body. The light source 4 may include lasers, light emitting diodes (LEDs), and similar. Another single source 45 in combination with a second optical lens 46 can be used for generation of a second group of light lines 47. The second group of light lines 47 intersect the first group of light lines 44 thereby forming the light grid 14 to be projected onto the vehicle body part. The generated light lines in one group (44, 47) may be parallel light lines. The two light sources 41 and 45 are spatially separated. Alternatively, further optical elements (not shown) such as mirrors, beam splitters, optical prisms, and similar, to may be used in combination with the source 41 to generate one more group of light lines intersecting light lines 44.

The light source may further include more individual light sources. Each light source may be arranged at a distance from the vehicle body. A first light source 41 may be at a first laser's predefined distance from the section of interest. A second light source 45 may be at a second laser's predefined distance from the section of interest. The first (second) light source 41 (45) may comprise more than one LED/laser. At least two light source groups may be spatially separated. Each light source may be configured to project plurality of light lines onto the vehicle part. The sources 41 and 45 may be moved in order to obtain desired light grid 14. If the section under inspection comprises particular lines, gaps, or similar to be inspected, the light lines may be inclined with respect to the particular lines/gaps of the section. In other words, the light lines may not be parallel to gaps/lines under inspection. In general, the light grid 14 may comprise at least two groups of parallel light lines, wherein a first group of parallel light lines 44 intersects a second group of parallel light lines 47.

In some examples, the light source 4 may comprises at least one mirror (not shown). The beam 42 may be directed onto the mirror which may then project a plurality of light lines which form part of the light grid. The mirror may be an oscillating mirror.

A technical benefit of such light source setup is that it is easy to be arranged, it is simple, flexible, and scalable. Scalability of the illumination system can be achieved by using additional optical elements and/or additional lasers, to thereby allow for generation of a light grid which correspond to the size of the section under inspection or desired resolution of the measurements.

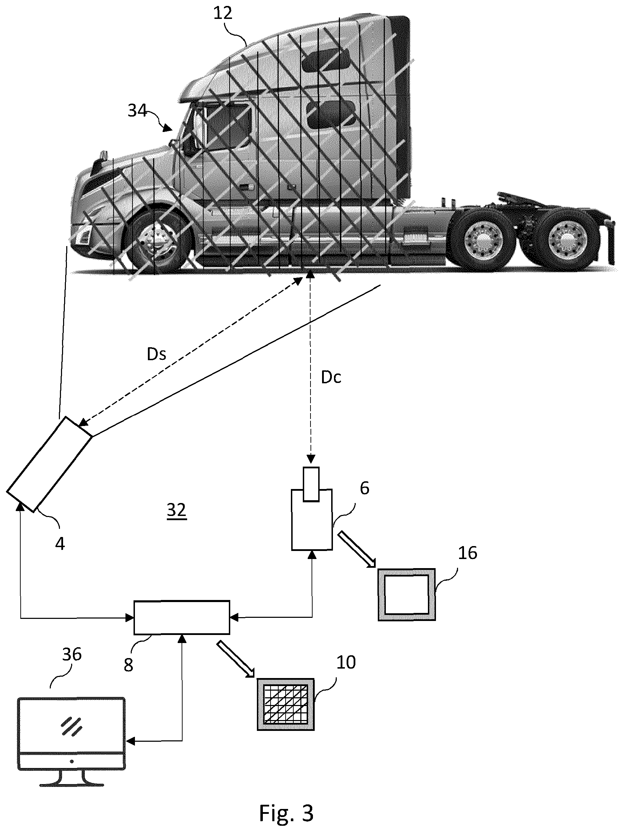

**FIG. 3** is an exemplary apparatus 32 for a quality inspection measurement of a vehicle body part according to yet another example. This example of the apparatus 32 is similar to the apparatus 2 shown in **FIG. 1** and further comprises a display 36 for displaying results of the quality inspection measurements, such as error data. The error data may be indicating which portions of the vehicle body part 12 do not comply with the predetermined design tolerance values. The error data may be then be used in root-cause analysis as well as in production processes thereby improving production of the vehicle. Displaying the error data on the display 36 may further reduce time required for performing the measurement. If a large number of errors or some important/significant errors are identified, further image processing may be stopped and the part under inspection may be returned to production for improvements and corrections. In this example, the apparatus 32 comprises a light source 4 which generates a light grid 34 comprising three groups of light lines. The more the light lines are created, the more accurate the measurement is.

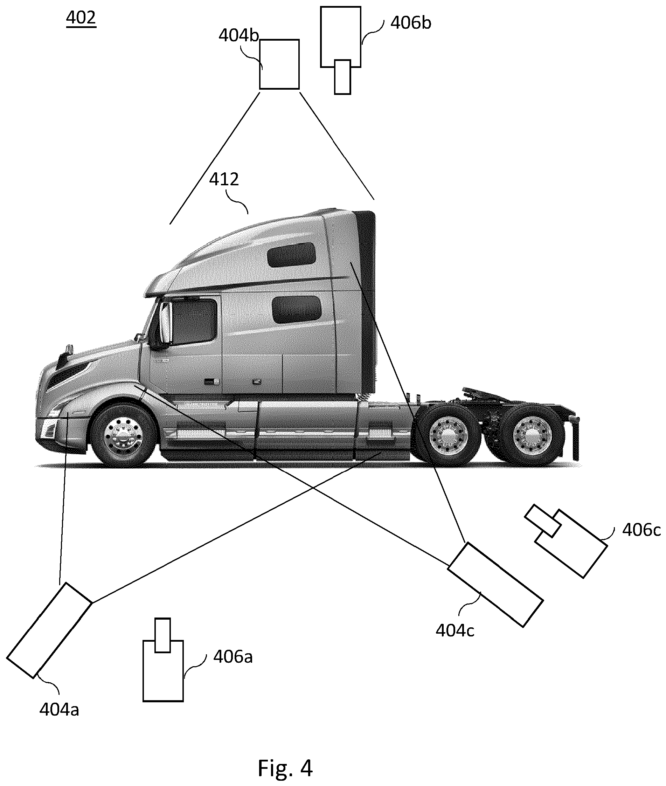

**FIG. 4** is yet another exemplary apparatus 402 for a quality inspection measurement of a vehicle body 412 according to the disclosure. In this example, the quality inspection measurement of the entire vehicle body is performed with three light sources, 404a, 404b, 404c and three cameras, 406a, 406b, 406c. The apparatus 2, shown in **FIG. 1** is scaled up to thereby cover larger space. The light sources 404a-c are arranged on different sides of the vehicle 412 (front, rear, top) to capture complete body images in one take. Each light source have a corresponding camera arranged on the same side to capture the image. All the light sources and the cameras may be connected to one processing unit 8 (connections not shown for simplicity), responsible for image processing, as explained in connection with **FIG. 1****.** The processing unit in this case may only run different image processing algorithms for processing more complex grids. Formed grids are not shown for simplicity.

Also, the apparatus may be scaled up further in order to achieve better accuracy. In particular, a number of light lines in the light grid determine a number of data points used by the processing unit and the image processing algorithm. The larger the number of data points (grid lines) is, the more accurate the measurement will be. A technical benefit of the scalable apparatus is faster measurement, and thereby cheaper production.

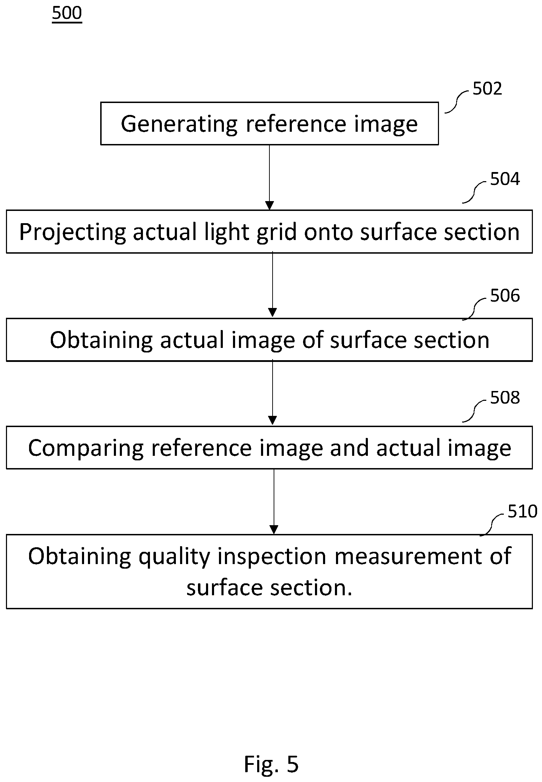

**FIG. 5** is an exemplary method 500 for a quality inspection measurement of a vehicle body part according to one example. The method 500 comprises: generating a reference image 502, by a processing unit, the reference image comprising a reference grid overlaying a reference vehicle part of a reference vehicle; projecting an actual light grid onto the vehicle part 504, by a light source, the light source being arranged at a first predefined distance from the vehicle part; obtaining an actual image of the vehicle part 506, by a camera, the actual image comprising the actual light grid projected onto the vehicle part, the camera being arranged at a second predefined distance from the vehicle part; comparing the reference image and the actual image 508, by the processing unit, using image processing; and obtaining the quality inspection measurement of the vehicle part 510, based on the comparison performed by the processing unit.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the inventive concepts being set forth in the following claims.

## Claims

1. An apparatus (2, 32) for performing a quality inspection measurement of a vehicle part (12), the apparatus comprising a light source (4), a camera (6), and a processing unit (8), wherein
- the processing unit is configured to provide a reference image (10), the reference image comprising a reference light grid overlaying a reference vehicle part,
- the light source being arranged at a first predefined distance from the vehicle part and configured to project an actual light grid (14) onto the vehicle part,
- the camera being arranged at a second predefined distance from the vehicle part and configured to obtain an actual image (16) of the vehicle part, the actual image comprising the actual light grid projected onto the vehicle part, and wherein
- the processing unit is configured to compare the reference image and the actual image using image processing algorithms to thereby obtain the quality inspection measurement of the vehicle part,
**characterised in that** the apparatus is configured to perform gap/flush measurements through the comparison of the reference image and the captured actual image.

2. The apparatus according to claim 1, wherein the processing unit is configured to determine if the obtained quality inspection measurement of the vehicle part complies with predetermined design tolerance values for the vehicle part.

3. The apparatus according to any of the preceding claims, wherein the processing unit is configured to identify outlines of the vehicle part using image processing of the obtained actual image.

4. The apparatus according to claim 3, wherein the quality inspection measurement includes a gap and/or flush measurement between the identified outlines of the vehicle body.

5. The apparatus according to any of the claims 2-4, configured with a machine learning model that is trained to estimate the predetermined design tolerance values based on information from the reference image, wherein a plurality of vehicle body measurement data are used to train the machine learning model to thereby identify the maximum and minimum delta design tolerance values (δ₁ₘₐₓ, δ₁ₘᵢₙ) such that these values are compared with the rest of the quality measurements to determine whether the measurement is higher or lower than the maximum and minimum delta values.

6. The apparatus according to any of the preceding claims, wherein the light source (41) comprises at least one laser and at least one optical element (43), the light source being configured to generate parallel grid lines (44, 47).

7. The apparatus according to any of the preceding claims, wherein the processing unit is further configured to generate error data, the error data indicating which portions of the vehicle part do not comply with the predetermined design tolerance values.

8. The apparatus according to claim 7, further comprising a display (36) for displaying the error data.

9. The apparatus according to any of the preceding claims, configured with a machine learning model that is trained to estimate the reference image based on information obtained from a plurality of measured vehicle bodies.

10. The apparatus according to any of the preceding claims, wherein the reference grid is defined by the same predefined distances between the light source and the camera and the vehicle part, wherein the reference image is generated such that the relevant distances between the light source, the camera, and the imaged reference part are the same as the corresponding distances between the light source, the camera, and the vehicle part, and wherein the reference grid and the actual grid correspond to each other.

11. The apparatus according to any of the preceding claims, wherein the light source and the camera are configured to be repositioned to thereby allow for a quality inspection measurement of another vehicle part.

12. The apparatus according to any of the preceding claims, wherein the quality inspection measurement of the entire vehicle body is performed with at least three light sources.

13. The apparatus according to any of the preceding claims, wherein the processing unit is configured to compare the reference light grid and the actual light grid by image processing algorithms in order to determine a mismatch between corresponding light lines of the reference light grid and the actual light grid.

14. A method (500) for performing a quality inspection measurement of a vehicle part, the method comprising:
- providing (502), by a processing unit, a reference image, the reference image comprising a reference grid overlaying a reference vehicle part of a reference vehicle,
- projecting (504), by a light source, an actual light grid onto the vehicle part, the light source being arranged at a first predefined distance from the vehicle part,
- obtaining (506), by a camera, an actual image of the vehicle part, the actual image comprising the actual light grid projected onto the vehicle part, the camera being arranged at a second predefined distance from the vehicle part,
- comparing (508), by the processing unit, the reference image and the actual image using image processing, and
- obtaining (510), based on the comparison performed by the processing unit, the quality inspection measurement of the vehicle part
**characterised in that** gap/flush measurements are performed through the comparison of the reference image and the captured actual image.

## Patentansprüche

1. Vorrichtung (2, 32) zum Durchführen einer Qualitätsprüfungsmessung eines Fahrzeugteils (12), wobei die Vorrichtung eine Lichtquelle (4), eine Kamera (6) und eine Verarbeitungseinheit (8) umfasst, wobei:
- die Verarbeitungseinheit dazu konfiguriert ist, ein Referenzbild (10) bereitzustellen, wobei das Referenzbild ein Referenzlichtgitter, das über einem Referenzfahrzeugteil liegt, umfasst,
- die Lichtquelle in einem ersten vordefinierten Abstand von dem Fahrzeugteil angeordnet ist und dazu konfiguriert ist, ein tatsächliches Lichtgitter (14) auf das Fahrzeugteil zu projizieren,
- die Kamera in einem zweiten vordefinierten Abstand von dem Fahrzeugteil angeordnet ist und dazu konfiguriert ist, ein tatsächliches Bild (16) des Fahrzeugteils zu erlangen, wobei das tatsächliche Bild das tatsächliche Lichtgitter, das auf das Fahrzeugteil projiziert wird, umfasst und wobei
- die Verarbeitungseinheit dazu konfiguriert ist, das Referenzbild und das tatsächliche Bild unter Verwendung von Bildverarbeitungsalgorithmen zu vergleichen, um dadurch die Qualitätsprüfungsmessung des Fahrzeugteils zu erlangen,
**dadurch gekennzeichnet, dass**
die Vorrichtung dazu konfiguriert ist, Spalt-/Bündigkeitsmessungen durch den Vergleich des Referenzbildes und des erfassten tatsächlichen Bildes durchzuführen.

2. Vorrichtung nach Anspruch 1, wobei die Verarbeitungseinheit dazu konfiguriert ist, zu bestimmen, ob die erlangte Qualitätsprüfungsmessung des Fahrzeugteils vorbestimmten Konstruktionstoleranzwerten für das Fahrzeugteil entspricht.

3. Vorrichtung nach einem der vorhergehenden Ansprüche, wobei die Verarbeitungseinheit dazu konfiguriert ist, Umrisse des Fahrzeugteils unter Verwendung von Bildverarbeitung des erlangten tatsächlichen Bildes zu identifizieren.

4. Vorrichtung nach Anspruch 3, wobei die Qualitätsprüfungsmessung eine Spalt- und/oder Bündigkeitsmessung zwischen den identifizierten Umrissen der Fahrzeugkarosserie umfasst.

5. Vorrichtung nach einem der Ansprüche 2-4, die mit einem Modell für maschinelles Lernen konfiguriert ist, das dazu trainiert ist, die vorbestimmten Konstruktionstoleranzwerte basierend auf Informationen aus dem Referenzbild zu schätzen, wobei eine Vielzahl von Fahrzeugkarosseriemessungsdaten dazu verwendet wird, das Modell für maschinelles Lernen zu trainieren, um dadurch die Maximal- und Mindestdelta-Konstruktionstoleranzwerte (δ₁ₘₐₓ, δ₁ₘᵢₙ) zu identifizieren, sodass diese Werte mit dem Rest der Qualitätsmessungen verglichen werden, um zu bestimmen, ob die Messung höher oder niedriger als die Maximal- und Mindestdeltawerte ist.

6. Vorrichtung nach einem der vorhergehenden Ansprüche, wobei die Lichtquelle (41) mindestens einen Laser und mindestens ein optisches Element (43) umfasst, wobei die Lichtquelle dazu konfiguriert ist, parallele Gitterlinien (44, 47) zu erzeugen.

7. Vorrichtung nach einem der vorhergehenden Ansprüche, wobei die Verarbeitungseinheit ferner dazu konfiguriert ist, Fehlerdaten zu erzeugen, wobei die Fehlerdaten anzeigen, welche Abschnitte des Fahrzeugteils nicht den vorbestimmten Konstruktionstoleranzwerten entsprechen.

8. Vorrichtung nach Anspruch 7, die ferner eine Anzeige (36) zum Anzeigen der Fehlerdaten umfasst.

9. Vorrichtung nach einem der vorhergehenden Ansprüche, die mit einem Modell für maschinelles Lernen konfiguriert ist, das dazu trainiert ist, das Referenzbild basierend auf Informationen, die anhand einer Vielzahl gemessener Fahrzeugkarosserien erlangt wurden, zu schätzen.

10. Vorrichtung nach einem der vorhergehenden Ansprüche, wobei das Referenzgitter durch die gleichen vordefinierten Abstände zwischen der Lichtquelle und der Kamera und dem Fahrzeugteil definiert ist, wobei das Referenzbild derart erzeugt wird, dass die relevanten Abstände zwischen der Lichtquelle, der Kamera und dem abgebildeten Referenzteil die gleichen sind wie die entsprechenden Abstände zwischen der Lichtquelle, der Kamera und dem Fahrzeugteil und wobei das Referenzgitter und das tatsächliche Gitter einander entsprechen.

11. Vorrichtung nach einem der vorhergehenden Ansprüche, wobei die Lichtquelle und die Kamera dazu konfiguriert sind, repositioniert zu werden, um dadurch eine Qualitätsprüfungsmessung eines anderen Fahrzeugteils zu ermöglichen.

12. Vorrichtung nach einem der vorhergehenden Ansprüche, wobei die Qualitätsprüfungsmessung der gesamten Fahrzeugkarosserie mit mindestens drei Lichtquellen durchgeführt wird.

13. Vorrichtung nach einem der vorhergehenden Ansprüche, wobei die Verarbeitungseinheit dazu konfiguriert ist, das Referenzlichtgitter und das tatsächliche Lichtgitter durch Bildverarbeitungsalgorithmen zu vergleichen, um eine Diskrepanz zwischen entsprechenden Lichtlinien des Referenzlichtgitters und des tatsächlichen Lichtgitters zu bestimmen.

14. Verfahren (500) zum Durchführen einer Qualitätsprüfungsmessung eines Fahrzeugteils, wobei das Verfahren Folgendes umfasst:
- Bereitstellen (502), durch eine Verarbeitungseinheit, eines Referenzbildes, wobei das Referenzbild ein Referenzlichtgitter, das über einem Referenzfahrzeugteil eines Referenzfahrzeugs liegt, umfasst,
- Projizieren (504), durch eine Lichtquelle, eines tatsächlichen Lichtgitters auf das Fahrzeugteil, wobei die Lichtquelle in einem ersten vordefinierten Abstand von dem Fahrzeugteil angeordnet ist,
- Erlangen (506), durch eine Kamera, eines tatsächlichen Bildes des Fahrzeugteils, wobei das tatsächliche Bild das tatsächliche Lichtgitter, das auf das Fahrzeugteil projiziert wird, umfasst und die Kamera in einem zweiten vordefinierten Abstand von dem Fahrzeugteil angeordnet ist,
- Vergleichen (508), durch die Verarbeitungseinheit, des Referenzbildes und des tatsächlichen Bildes unter Verwendung von Bildverarbeitung, und
- Erlangen (510), basierend auf dem Vergleich, der durch die Verarbeitungseinheit durchgeführt wird, der Qualitätsprüfungsmessung des Fahrzeugteils,
**dadurch gekennzeichnet, dass**
Spalt-/Bündigkeitsmessungen durch den Vergleich des Referenzbildes und des erfassten tatsächlichen Bildes durchgeführt werden.

## Revendications

1. Appareil (2,32) permettant d'effectuer une mesure d'inspection de qualité d'une partie de véhicule (12), l'appareil comprenant une source lumineuse (4), une caméra (6) et une unité de traitement (8), dans lequel :
- l'unité de traitement est configurée pour fournir une image de référence (10), l'image de référence comprenant une grille lumineuse de référence recouvrant une partie de véhicule de référence,
- la source lumineuse étant disposée à une première distance prédéfinie à partir de la partie de véhicule et configurée pour projeter une grille lumineuse réelle (14) sur la partie de véhicule,
- la caméra étant disposée à une seconde distance prédéfinie à partir de la partie de véhicule et configurée pour obtenir une image réelle (16) de la partie de véhicule, l'image réelle comprenant la grille lumineuse réelle projetée sur la partie de véhicule, et dans lequel
- l'unité de traitement est configurée pour comparer l'image de référence et l'image réelle en utilisant des algorithmes de traitement d'image pour obtenir ainsi la mesure d'inspection de qualité de la partie de véhicule,
**caractérisée en ce que** l'appareil est configuré pour effectuer des mesures d'espace/affleurement à travers la comparaison de l'image de référence et de l'image réelle capturée.

2. Appareil selon la revendication 1, dans lequel l'unité de traitement est configurée pour déterminer si la mesure d'inspection de qualité obtenue de la partie de véhicule est conforme aux valeurs de tolérance de conception prédéterminées pour la partie de véhicule.

3. Appareil selon l'une quelconque des revendications précédentes, dans lequel l'unité de traitement est configurée pour identifier les contours de la partie de véhicule en utilisant un traitement d'image de l'image réelle obtenue.

4. Appareil selon la revendication 3, dans lequel la mesure d'inspection de qualité inclut une mesure d'espace et/ou d'affleurement entre les contours identifiés de la carrosserie de véhicule.

5. Appareil selon l'une quelconque des revendications 2 à 4, configuré avec un modèle d'apprentissage automatique qui est entraîné pour estimer les valeurs de tolérance de conception prédéterminées sur la base d'informations provenant de l'image de référence, dans lequel une pluralité de données de mesure de carrosserie de véhicule sont utilisées pour entraîner le modèle d'apprentissage automatique afin d'identifier ainsi les valeurs de tolérance de conception delta maximales et minimales (δ₁ₘₐₓ ,δ₁ₘᵢₙ) de sorte que ces valeurs soient comparées au reste des mesures de qualité pour déterminer si la mesure est supérieure ou inférieure aux valeurs delta maximales et minimales.

6. Appareil selon l'une quelconque des revendications précédentes, dans lequel la source lumineuse (41) comprend au moins un laser et au moins un élément optique (43), la source lumineuse étant configurée pour générer des lignes de grille parallèles (44,47).

7. Appareil selon l'une quelconque des revendications précédentes, dans lequel l'unité de traitement est en outre configurée pour générer des données d'erreur, les données d'erreur indiquant les portions de la partie de véhicule qui ne sont pas conformes aux valeurs de tolérance de conception prédéterminées.

8. Appareil selon la revendication 7, comprenant en outre un affichage (36) pour afficher les données d'erreur.

9. Appareil selon l'une quelconque des revendications précédentes, configuré avec un modèle d'apprentissage automatique qui est entraîné pour estimer l'image de référence sur la base d'informations obtenues à partir d'une pluralité de carrosseries de véhicules mesurées.

10. Appareil selon l'une quelconque des revendications précédentes, dans lequel la grille de référence est définie par les mêmes distances prédéfinies entre la source lumineuse et la caméra et la partie de véhicule, dans lequel l'image de référence est générée de sorte que les distances pertinentes entre la source lumineuse, la caméra et la partie de référence imagée soient les mêmes que les distances correspondantes entre la source lumineuse, la caméra et la partie de véhicule, et dans lequel la grille de référence et la grille réelle correspondent l'une à l'autre.

11. Appareil selon l'une quelconque des revendications précédentes, dans lequel la source lumineuse et la caméra sont configurées pour être repositionnées afin de permettre ainsi une mesure d'inspection de qualité d'une autre partie de véhicule.

12. Appareil selon l'une quelconque des revendications précédentes, dans lequel la mesure d'inspection de qualité de l'ensemble de la carrosserie de véhicule est effectuée avec au moins trois sources lumineuses.

13. Appareil selon l'une quelconque des revendications précédentes, dans lequel l'unité de traitement est configurée pour comparer la grille lumineuse de référence et la grille lumineuse réelle par des algorithmes de traitement d'image afin de déterminer une discordance entre les lignes lumineuses correspondantes de la grille lumineuse de référence et de la grille lumineuse réelle.

14. Procédé (500) permettant d'effectuer une mesure d'inspection de qualité d'une partie de véhicule, le procédé comprenant :
- la fourniture (502), par une unité de traitement, d'une image de référence, l'image de référence comprenant une grille de référence recouvrant une partie de véhicule de référence d'un véhicule de référence,
- la projection (504), par une source lumineuse, d'une grille lumineuse réelle sur la partie de véhicule, la source lumineuse étant disposée à une première distance prédéfinie à partir de la partie de véhicule,
- l'obtention (506), par une caméra, d'une image réelle de la partie de véhicule, l'image réelle comprenant la grille lumineuse réelle projetée sur la partie de véhicule, la caméra étant disposée à une seconde distance prédéfinie à partir de la partie de véhicule,
- la comparaison (508), par l'unité de traitement, de l'image de référence et l'image réelle en utilisant un traitement d'image, et
- l'obtention (510), sur la base de la comparaison effectuée par l'unité de traitement, de la mesure d'inspection de qualité de la partie de véhicule **caractérisée en ce que** des mesures d'espace/affleurement sont effectuées à travers la comparaison de l'image de référence et de l'image réelle capturée.
